Europäisches Patentamt

European Patent Office

Office européen des brevets

(11) Publication number: **0 359 849**
**A1**

## (12) EUROPEAN PATENT APPLICATION

(21) Application number: 88115421.5

(51) Int. Cl.⁵: **G06F 11/00**

(22) Date of filing: **21.09.88**

(43) Date of publication of application:
**28.03.90 Bulletin 90/13**

(84) Designated Contracting States:
**DE FR GB**

(71) Applicant: **ROBERT BOSCH GMBH**
**Postfach 10 60 50**
**D-7000 Stuttgart 10(DE)**

(72) Inventor: **Jundt, Werner, Dipl.-Ing.**
**Belschnerstrasse 24**
**D-7140 Ludwigsburg(DE)**
Inventor: **Miller, Norbert, Dipl.-Ing.**
**Schillerstrasse 19/1**
**D-7101 Abstatt(DE)**

(54) Method of detecting program counter malfunction.

(57) The ROM of a microprocessor has all program storage locations which are not necessary for the normal program run loaded with an instruction which causes the CPU of the microprocessor to go to directly to a predetermined address when the program counter of the microprocessor causes the CPU to access these storage locations due to a malfunction. Preferably the predetermined condition is that for an unconditioned branch and at the destination address of this branch, a routine is implemented which makes it possible for the CPU to continue operating logically without reset.

EP 0 359 849 A1

## Method of Detecting Program Counter Malfunction

The present invention relates to a method of detecting corruption of the output of a program counter of a microprocessor.

Microprocessor based systems utilise a central processing unit (CPU) with an associated program counter for addressing program and data information stored in a memory such as a ROM. It is usual for the memory to have one or more areas which are not dedicated to either program or data information. Errors in addressing the memory by the program counter result in the CPU accessing addresses of these areas of the memory. If a watchdog circuit is provided, these addressing errors will result in a reset signal being initiated after a period of time.

There are two difficulties with this arrangement. The first is that the time taken for a reset signal to be generated as a result of the watchdog may be relatively long which in turn could result in a serious malfunctioning of the microprocessor. The second is that the reset signal is not distinguishable from other reset signals produced as a result of the operation of the watchdog circuit.

The present invention provides a method of detecting addressing errors due to incorrect counts from the program counter which comprises writing a predetermined address into areas of the memory not used for program or data information whereby to cause the CPU to go to a predetermined working point directly.

Preferably, all storage locations in all areas of the memory not used for program or data information contain the same instructions. In some circumstances, however, different areas of the memory can contain different instructions so that the CPU will go to different predetermined working points depending on where the error counting occurred.

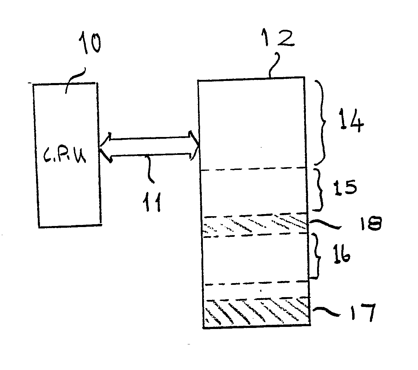

Features and advantages of the present invention will become apparent from the following description of an embodiment thereof given by way of example with reference to the accompanying drawing which shows diagrammatically a microprocessor arrangement.

In the drawing, the microprocessor comprises a CPU 10 which communicates via data and address buses 11 with a storage device such as a ROM 12. The storage space within the ROM 12 is divided into a number of areas. In this example, an area 14 contains program information, an area 15 contains data information, an area 16 contains further data information and areas 17 and 18 are free of either program or data information.

The CPU 10 includes a program counter (not shown) whose output is used to step the program through its various processes. Under normal operation, the output from the program counter is such that the CPU will never access the ares 17 and 18 of the ROM 12. If the output from the program counter becomes corrupted for any reason, one or more of the areas other than the areas 14, 15 and 16 will be accessed by the CPU. Accessing the areas 14, 15 and 16 causes the microprocessor to malfunction and eventually this will be protected by a watchdog circuit and the microprocessor reset. However, a period of time elapses before the watchdog circuit operates and in this period of time the processor continues to operate although in an erroneous fashion.

In order to reduce the time before a fault is recognised, the present invention contemplates writing specific instructions in each free area 17, 18 to bring the CPU to a predetermined condition as soon as an address within the area 17 or 18 is accessed. As an example, the code for a unconditioned branch is written into all storage locations of the ROM 12 not needed for the program run i.e. into the areas 17 and 18. The program sequence which begins at the address indicated by the code takes the processor to a required working point directly without reset and so the program is continued at the predetermined condition which enables the CPU to continue to operate logically. The predetermined condition varies according to the type of CPU being used.

It is possible to write the same code into each address location in each area of free space 17, 18 or alternatively to write the codes for one or more different predetermined conditions into these addresses so that the CPU will go to different predetermined conditions depending on where the error in counting occurred.

## Claims

1. A method of detecting addressing errors due to incorrect counts from a program counter of a central processing unit operating in conjunction with a memory loaded with program and data information, the method comprising writing a predetermined address into areas of the memory not used for program or data information whereby to cause the CPU to go to a predetermined working point directly.

2. A method according to claim 1 wherein all areas of the memory not used for program or data information contain the same predetermined address.

3. A method according to claim 1 wherein a plurality of different predetermined addresses are written into respective different areas of the memory not used for program or data information.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| E,X | PATENT ABSTRACTS OF JAPAN, vol. 12, no. 417 (P-782)[116], 7th November 1988, page 116 P 782; & JP-A-63 155 236 (FUJI ELECTRIC CO LTD) 28-06-1988 * Abstract * | 1,2 | G 06 F 11/00 |
| X | PATENT ABSTRACTS OF JAPAN, vol. 11, no. 303 (P-622)[138], 3rd October 1987, page 138 P 622; & JP-A-62 95 634 (NEC CORP.) 02-05-1987 * Abstract * | 1,3 | |

TECHNICAL FIELDS SEARCHED (Int. Cl.4)

G 06 F 11

The present search report has been drawn up for all claims

| Place of search | Date of completion of the search | Examiner |
|---|---|---|
| THE HAGUE | 21-04-1989 | ALONSO Y GOICOLEA L. |